# EUROPEAN PATENT APPLICATION

(11) **EP 0 585 191 A2**
(43) Date of publication of application: **02.03.1994**
(21) Application number: 93480086.3
(22) Date of filing: 30.06.1993
(51) Int. Cl.: G06F 9/44

(54) **Method of and apparatus for providing presentation precedence service**

(30) Priority: 28.08.1992 US 937617
(71) Applicant: International Business Machines Corporation, Armonk, N.Y. 10504 (US)
(72) Inventor: Johnson, William J., Flower Mount, TX 75028 (US); Williams, Marvin L., Lewisville, TX 75067 (US); Fitzpatrick, Greg P., Rochester, MN 55906 (US)
(74) Representative: de Pena, Alain

(57) **Abstract**

Control of the priority of simultaneous multimedia presentations in a multimedia data processing system is provided. A server accepts and acts on requests for visual and audible precedence over other presentations running on a desktop. The client of the server is given desktop priority by having the associated objects surfaced to the desktop top. This ensures a multimedia application is presented as a foreground process. The server also provides synchronization for multiple clients requesting desktop precedence. The client of the precedence server may be initiated by marks in a presentation which indicate to the client to make a request for precedence. An application may also make a request by virtue of other decisions not initiated by detecting marks in a presentation.

## Description

This invention relates in general to data processing systems, and in particular to a method of, and apparatus for, controlling the priority of simultaneous multimedia presentations in a multimedia data processing system.

In a concurrent environment where many multimedia presentations may be executing simultaneously, it is difficult to ensure that an important presentation be seen by an observer. For example, a user may be executing several multimedia presentations simultaneously, one of which may be a foreground task, while others are background tasks. The creator of a presentation should have control over guaranteeing an observer will see an important presentation. A method is needed whereby the author can control which presentations or portions thereof have precedence over other presentations. An observer has no way of knowing which of the multimedia presentations or parts of presentations are more important, foreground or background. The user preference for locating desktop objects is the only means for prioritizing what is seen. In existing systems, a user's location of desktop objects and panels determines what is seen. Simultaneously executing presentations need a mechanism whereby important multimedia presentations or portions thereof are seen and/or heard by an observer, no matter how many applications are competing for attention and no matter how many user interface obstacles exist to otherwise prevent an effective communication. A method is needed whereby a sequence of events within a multimedia presentation can automatically substantiate itself as a foreground process.

Existing systems present the user with two difficulties. The first difficulty is that existing systems do not provide a method to control which presentations have precedence over other presentations. The second difficulty is that existing systems do not provide a method to control which portions of a presentation have precedence over other presentations.

Thus existing systems provide no method of, or apparatus for, controlling the priority of simultaneous multimedia presentations in a multimedia data processing system. As such, there is a need for a method of, and apparatus for, controlling the priority of simultaneous multimedia presentations in a multimedia data processing system.

The invention disclosed herein comprises a method of, and apparatus for, controlling the priority of simultaneous multimedia presentations in a multimedia data processing system. The method and apparatus described herein substantially eliminate or reduce the difficulties of attempting to execute simultaneous multimedia presentations in a multimedia data processing system by controlling the priority of simultaneous multimedia presentations in a multimedia data processing system.

In accordance with one aspect of the present invention, a precedence service is provided. The precedence service accepts and acts on requests for visual and audible precedence over other presentations running on the desktop. The client of the precedence service is given desktop priority by having the associated objects (e.g., panel(s), icons) surfaced to the desktop foreground or focus. This allows a multimedia application to be presented as a foreground process. The precedence service also allows multiple callers requesting desktop precedence to be synchronized, thereby providing to each requesting application priority presentation time for segments of a presentation which are being requested for precedence.

Another aspect of this invention is that the client of the precedence service may be initiated by associating a priority with a presentation. This association of priority may be provided by precedence marks in a presentation which indicate to the requester to make a request for precedence. Such precedence marks in segments of a presentation cause the presenting application to call the precedence server so that precedence is invoked. The precedence marks may include a unique identifier to distinguish the precedence mark from a data object which is neither a start precedence mark nor an end precedence mark, a precedence mark type to distinguish a start precedence mark from an end precedence mark, and a priority. Alternatively, the association of priority may be provided by an application program making a request for precedence by virtue of other decisions not initiated by detecting marks in a presentation.

Yet another aspect of this invention is user interface management code for allowing an application program's objects to surface to a priority view on a desktop.

The present invention has the advantage of providing desktop presentation precedence specified in a presentation and granted by a service.

The present invention has the further advantage of allowing a user of a computer to see and/or hear important presentations on a busy desktop no matter what else is executing and no matter what activity the user is doing on the computer.

The present invention has the still further advantage of allowing an originator to convey importance via precedence values.

The present invention has the still further advantage of providing priority management of precedence requesters.

The present invention has the still further advantage of providing scheduling management of precedence requesters.

The present invention has the still further advantage of priorities of desktop precedence can be implemented so that there can be a variety of priority among requests.

The present invention has the still further advantage that video, audio, and other multimedia data types may be granted precedence.

For a more complete understanding of the present invention and the advantages thereof, reference is now made to the Detailed Description in conjunction with the attached Drawings, in which:
Figure 1 is a block diagram of a data processing system used in performing the method of the present invention and forming part of the apparatus of the present invention;
Figure 2 is a flow chart illustrating the operations preferred in carrying out the Precedence Mark Process portion of the present invention;
Figure 3 is a flow chart, continued from Figure 2, illustrating the operations preferred in carrying out the Add Precedence Mark Process portion of the present invention;
Figure 4 is a flow chart, continued from Figure 2, illustrating the operations preferred in carrying out the Scan Precedence Mark Process portion of the present invention;
Figure 5 is a flow chart illustrating the operations preferred in carrying out the Precedence Detection Process portion of the present invention; and
Figure 6 is a flow chart illustrating the operations preferred in carrying out the Precedence Play Process portion of the present invention.

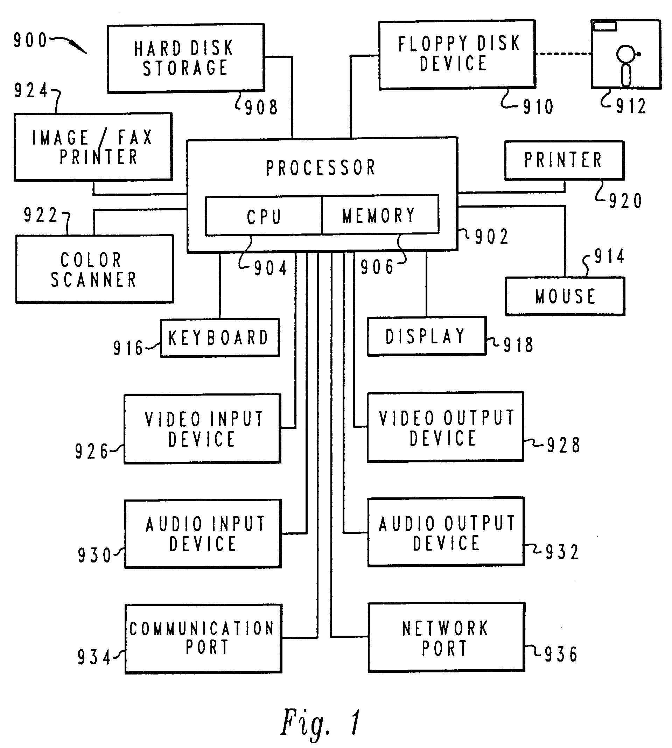

Referring first to Figure 1, there is shown in block diagram form, a data processing system 900 according to the present invention. The data processing system 900 includes a processor 902, which includes a central processing unit (CPU) 904, and a memory 906. Additional memory, in the form of a hard disk file storage 908 and a floppy disk device 910, may be connected to the processor 902. Floppy disk device 910 may receive a diskette 912 which has computer program code recorded thereon that implements the present invention in the data processing system 900. The data processing system 900 may also include user interface hardware, including a mouse 914 and a keyboard 916 for allowing user input to the processor 902 and a display 918 for presenting visual data to the user. The data processing system may also include a printer 920 for printing information. The data processing system 900 may also include image devices, including a scanner 922 for scanning images into the data processing system 900 and an image/fax printer 924 for printing images. The data processing system 900 may also include video devices, including a video input device 926 for entering video into the data processing system 900 and a video output device 928 for displaying video. The data processing system 900 may also include audio devices, including an audio input device 930 for entering audio into the data processing system 900 and an audio output device 932 for reproducing audio. The data processing system 900 may also include communication devices, including a communications port 934 for communicating with another system and a network port 936 for communicating with a network.

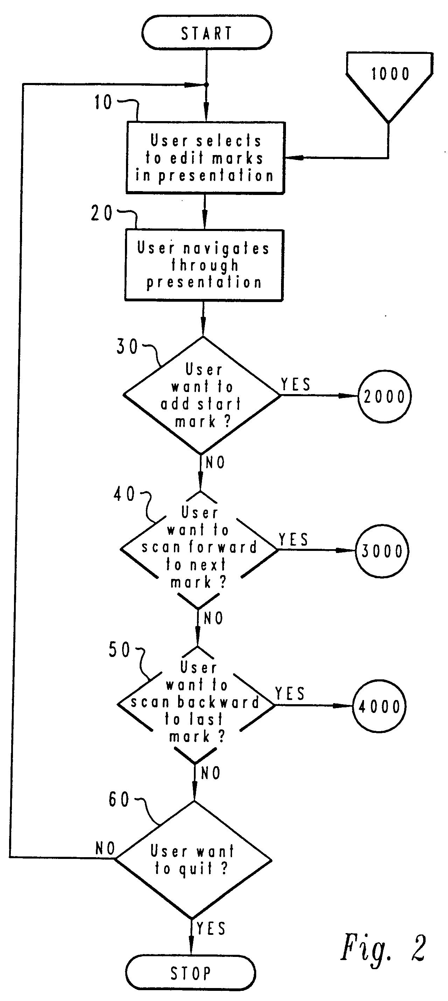

Referring now to Figure 2 through Figure 6, flowcharts illustrating operations preferred in carrying out the present invention are shown. In the flowcharts, the graphical conventions of a diamond for a test or decision and a rectangle for a process or function are used. These conventions are well understood by those skilled in the art, and the flowcharts are sufficient to enable one of ordinary skill to write code in any suitable computer programming language.

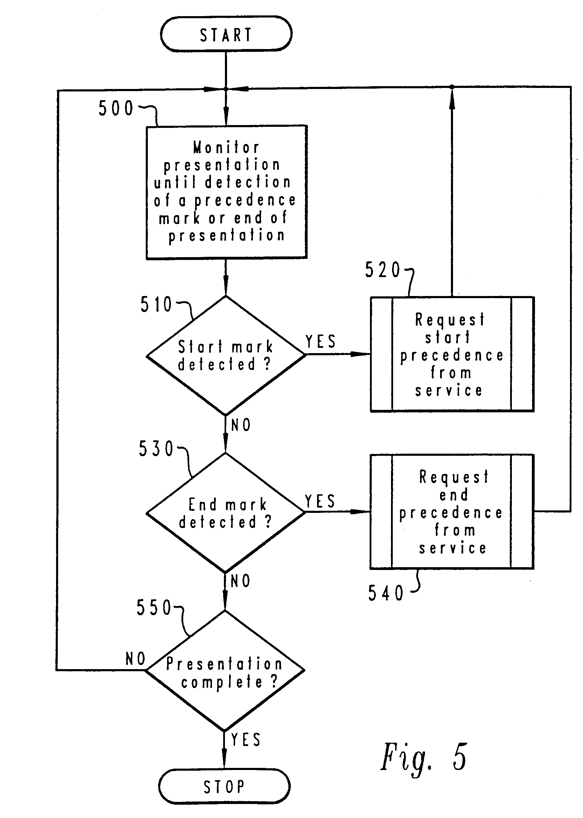

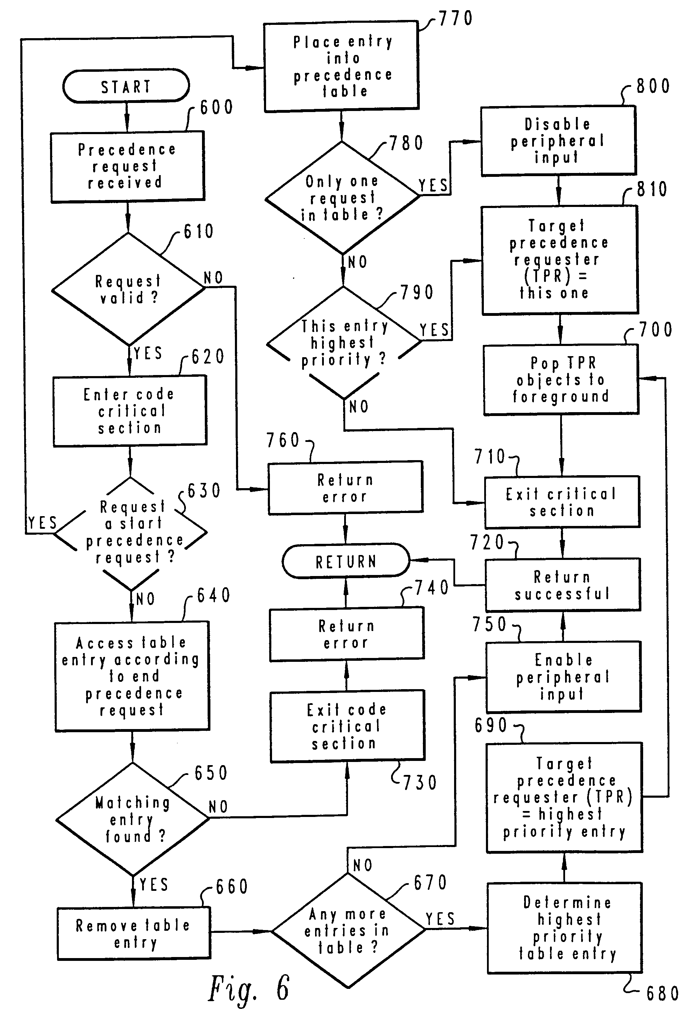

The operations preferred in carrying out the present invention may be implemented as three processes or programs comprising a Precedence Mark Process, a Precedence Detection Process, and a Precedence Play Process. The Precedence Mark Process, illustrated in Figure 2 through Figure 4, allows a user to add, delete, or scan for a Precedence Mark in a multimedia presentation. A precedence mark may include a unique identifier to distinguish the precedence mark from a data object which is neither a start precedence mark nor an end precedence mark, a precedence mark type to distinguish a start precedence mark from an end precedence mark, and a priority. The Precedence Detection Process, illustrated in Figure 5, detects a Precedence Mark in a multimedia presentation and requests precedence from the Precedence Play Process. The Precedence Detection Process is a client portion of precedence service. The Precedence Play Process, illustrated in Figure 6, services a request for precedence from the Precedence Detection Process. The Precedence Play Process is a server portion of precedence service. In an alternative embodiment which is not a client-server implementation, the Precedence Play Process may be a subroutine called by the Precedence Detection Process.

Referring now to Figure 2, which illustrates the operations preferred in carrying out the Precedence Mark Process portion of the present invention, after the start of the program, process block 10 allows a user to select a function of editing precedence marks in a presentation. Thereafter, process block 20 allows the user to navigate through a presentation to a first user selected location. Thereafter, decision block 30 determines if the user wishes to add a start precedence mark in the presentation. If the user does not wish to add a start precedence mark in the presentation, then decision block 40 determines if the user wishes to scan forward through the presentation to a next precedence mark. If the user does not wish to scan forward through the presentation to a next precedence mark, then decision block 50 determines if the user wishes to scan backward through the presentation to a prior precedence mark. If the user does not wish to scan backward through the presentation to a prior precedence mark, then decision block 60 determines if the user wishes to quit. If the user wishes to quit, then the program stops.

Returning now to decision block 60, if the user does not wish to quit, then the program loops back to process block 10.

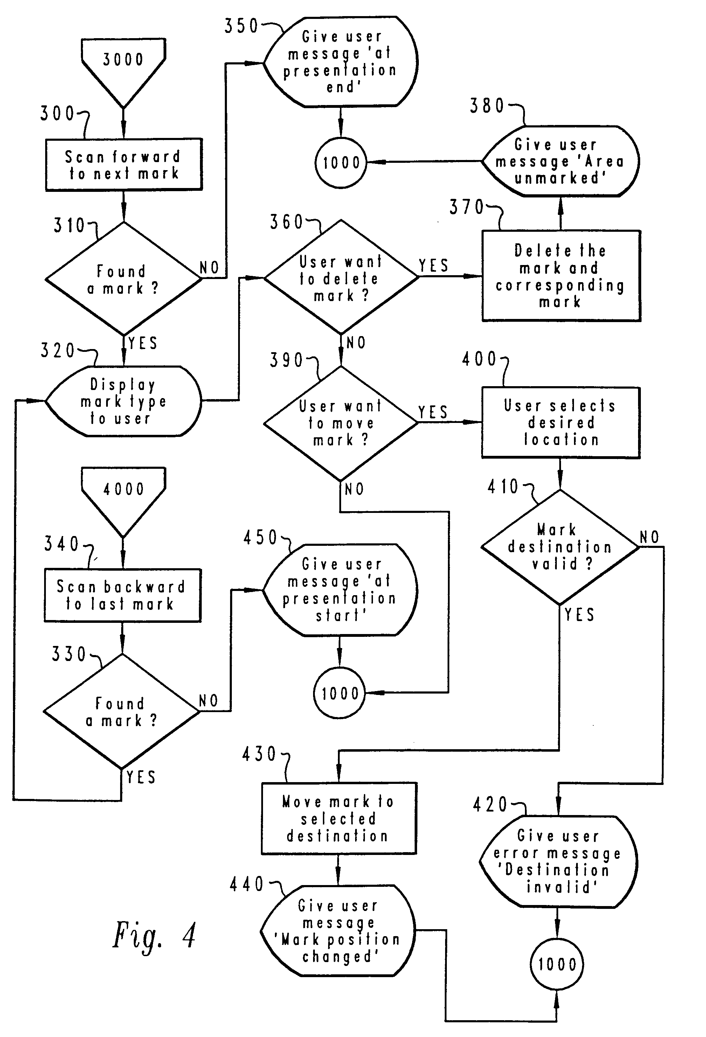

Returning now to decision block 50, if the user wishes to scan backward through the presentation to a prior precedence mark, then processing continues to process block 340 as shown on Figure 4. This processing path is illustrated by flowchart connectors 4000 on Figure 2 and Figure 4.

Returning now to decision block 40, if the user wishes to scan forward through the presentation to a next precedence mark, then processing continues to process block 300 as shown on Figure 4. This processing path is illustrated by flowchart connectors 3000 on Figure 2 and Figure 4.

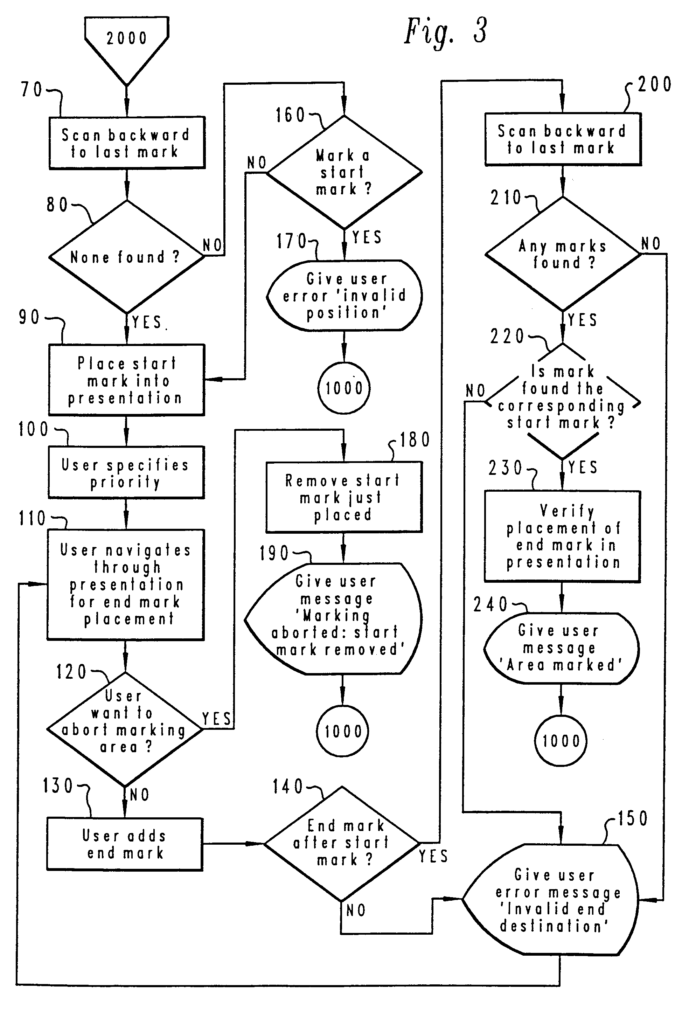

Returning now to decision block 30, if the user wishes to add a start precedence mark in the presentation, then processing continues to process block 70 as shown on Figure 3. This processing path is illustrated by flowchart connectors 2000 on Figure 2 and Figure 3.

Referring next to Figure 3, after control passes from decision block 30 on Figure 2 to process block 70 on Figure 3, as illustrated by flowchart connectors 2000 on Figure 2 and Figure 3, process block 70 scans backwards through the presentation searching for a precedence mark. Thereafter, decision block 80 determines if no prior precedence mark was found. If no prior precedence mark was found, then process block 90 places a start precedence mark in the presentation at the first user selected location. Thereafter, process block 100 allows the user to specify a priority for the start precedence mark. Thereafter, process block 110 allows the user to navigate through the presentation to a second user selected location. Thereafter, decision block 120 determines if the user wishes to abort precedence marking of that portion of the presentation between the first user selected location and the second user selected location. If the user does not wish to abort precedence marking, then process block 130 places an end precedence mark in the presentation at the second user selected location. Thereafter, decision block 140 determines if the end precedence mark is after the start precedence mark. If the end precedence mark is after the start precedence mark, then process block 200 scans backwards from the location of the precedence end mark searching for a prior precedence mark. Thereafter, decision block 210 determines if a prior precedence mark was found. If a prior precedence mark was found, then decision block 220 determines if the prior precedence mark is a corresponding start precedence mark. If the prior precedence mark is a corresponding start precedence mark, then process block 230 verifies the placement of an end precedence mark in the presentation at the second user selected location. Thereafter, process block 240 provides to the user a message that the selected portion of the presentation is marked. Thereafter, control passes to process block 10 on Figure 2. This processing path is illustrated by flowchart connectors 1000 on Figure 3 and Figure 2.

Returning now to decision block 220, if the prior precedence mark is not a corresponding start precedence mark, then process block 150 provides an error message to the user that the user has selected an invalid location for an end precedence mark. Thereafter, the program loops back to process block 110 for the user to select a valid location for an end precedence mark.

Returning now to decision block 210, if a prior precedence mark was not found, then the program continues to process block 150 to provide an error message to the user as described above.

Returning now to decision block 140, if the end precedence mark is not after the start precedence mark, then the program continues to process block 150 to provide an error message to the user as described above.

Returning now to decision block 120, if the user wishes to abort precedence marking of that portion of the presentation between the first user selected location and the second user selected location, then process block 180 removes from the presentation the start precedence mark just placed. Thereafter, process block 190 provides a message to the user that precedence marking has been aborted and that the start precedence mark has been removed. Thereafter, control passes to process block 10 on Figure 2. This processing path is illustrated by flow-chart connectors 1000 on Figure 3 and Figure 2.

Returning now to decision block 80, if a prior precedence mark was found, then decision block 160 determines if the prior precedence mark is a start precedence mark. If the prior precedence mark is a start precedence mark, then process block 170 provides an error message to the user that the user has selected an invalid location for a start precedence mark. Thereafter, control passes to process block 10 on Figure 2. This processing path is illustrated by flowchart connectors 1000 on Figure 3 and Figure 2.

Returning now to decision block 160, if the prior precedence mark is not a start precedence mark, then the program continues to process block 90 for placement of a valid start precedence mark.

Referring next to Figure 4, after control passes from decision block 40 on Figure 2 to process block 300 on Figure 4, as illustrated by flowchart connectors 3000 on Figure 2 and Figure 4, process block 300 scans forward from the first user selected location searching for a next precedence mark. Thereafter, decision block 310 determines if a next precedence mark was found. If a next precedence mark was found, then process block 320 displays to the user the type of precedence mark found. The type of precedence mark may either be a start precedence mark or an end precedence mark. Thereafter, decision block 360 determines if the user wishes to delete the precedence mark. If the user wishes to delete the precedence mark, then process block 370 deletes the precedence mark from the presentation. Thereafter, process block 380 displays to the user a message that the precedence mark has been deleted and the area is unmarked. Thereafter, control passes to process block 10 on Figure 2. This processing path is illustrated by flowchart connectors 1000 on Figure 4 and Figure 2.

Returning now to decision block 360, if the user does not wish to delete the precedence mark, then decision block 390 determines if the user wishes to move the precedence mark. If the user wishes to move the precedence mark, then process block 400 allows the user to navigate to and select a desired location to which the precedence mark is to be moved. Thereafter, decision block 410 determines if the desired location is a valid location. A valid location for a start precedence mark is a location before the location of an end precedence mark. A valid location for an end precedence mark is a location after the location of a start precedence mark. If the desired location is a valid location, then process block 430 moves the precedence mark to the desired location. Thereafter, process block 440 displays to the user a message that the precedence mark position has been changed. Thereafter, control passes to process block 10 on Figure 2. This processing path is illustrated by flowchart connectors 1000 on Figure 4 and Figure 2.

Returning now to decision block 410, if the desired location is not a valid location, then process block 420 displays to the user a message that the desired location is an invalid destination. Thereafter, control passes to process block 10 on Figure 2. This processing path is illustrated by flowchart connectors 1000 on Figure 4 and Figure 2.

Returning now to decision block 390, if the user does not wish to move the precedence mark, then control passes to process block 10 on Figure 2. This processing path is illustrated by flowchart connectors 1000 on Figure 4 and Figure 2.

Returning now to decision block 310, if a next precedence mark was not found, then process block 350 displays to the user a message that the search proceeded to the end of the presentation and that no precedence mark was found. Thereafter, control passes to process block 10 on Figure 2. This processing path is illustrated by flowchart connectors 1000 on Figure 4 and Figure 2.

Referring again to Figure 4, after control passes from decision block 50 on Figure 2 to process block 340 on Figure 4, as illustrated by flowchart connectors 4000 on Figure 2 and Figure 4, process block 340 scans backwards from the first user selected location searching for a prior precedence mark. Thereafter, decision block 330 determines if a prior precedence mark was found. If a prior precedence mark was found, then the program continues to process block 320 for further processing of the prior precedence mark.

Returning now to decision block 330, if a prior precedence mark was not found, then process block 450 displays to the user a message that the search proceeded to the beginning of the presentation and that no precedence mark was found. Thereafter, control passes to process block 10 on Figure 2. This processing path is illustrated by flowchart connectors 1000 on Figure 4 and Figure 2.

Referring next to Figure 5, the operations preferred in carrying out the Precedence Detection Process portion of the present invention are illustrated. After the start of the program, process block 500 monitors an executing presentation until it detects either a precedence mark or the end of the presentation. Thereafter, decision block 510 determines if a start precedence mark is detected. If a start precedence mark is not detected, then decision block 530 determines if an end precedence mark is detected. If an end precedence mark is not detected, then decision block 550 determines if the end of the presentation is detected. If the end of the presentation is not detected, then the program loops back to process block 500 for further monitoring of the presentation.

Returning now to decision block 510, if a start precedence mark is detected, then process block 520 sends a request to the Precedence Play Process to start the precedence of the presently executing presentation. Alternatively, process block 520 may call the Precedence Play Process to start the precedence of the presently executing presentation. Thereafter, the program loops back to process block 500 for further monitoring of the presentation.

Returning now to decision block 530, if an end precedence mark is detected, then process block 540 sends a request to the Precedence Play Process to end the precedence of the presently executing presentation. Alternatively, process block 540 may call the Precedence Play Process to end the precedence of the presently executing presentation. Thereafter, the program loops back to process block 500 for further monitoring of the presentation.

Returning now to decision block 550, if the end of the presentation is detected, then the program stops.

Alternatively, the process depicted in Figure 5 may be implemented without the use of precedence marks. In such an alternative embodiment, process block 520 may be included in an application program to send a request to the Precedence Play Process to start the precedence of the presently executing presentation. Process block 540 may also be included in the application program to send a request to the Precedence Play Process to end the precedence of the presently executing presentation.

Referring next to Figure 6, the operations preferred in carrying out the Precedence Play Process portion of the present invention are illustrated. After the start of the program, process block 600 awaits the receipt of a precedence request from a Precedence Detection Process. After the receipt of a precedence request from a Precedence Detection Process, decision block 610 determines if the precedence request is valid. If the precedence request is valid, process block 620 enters a code critical section. A code critical section is a part of an asynchronous procedure that cannot be executed simultaneously with a certain part of another asynchronous procedure. That part of the other asynchronous procedure is also a code critical section. The Precedence Play Process is an asynchronous procedure relative to any other procedure which may attempt to change the focus of the system. A part of another asynchronous procedure which may attempt to change the focus of the system may not be executed simultaneously with that part of the Precedence Play Process beginning with process block 620, as the purpose of this part of the Precedence Play Process is to determine which asynchronous procedure will be allowed to change the focus of the system.

Thereafter, decision block 630 determines if the received precedence request is a start precedence request. If the received precedence request is a start precedence request, then process block 770 places an entry representing the start precedence request in a Precedence Table. The Precedence Table represents a queue of pending precedence requests. Thereafter, decision block 780 determines if there is only one precedence request entry in the Precedence Table. If there is only one precedence request entry in the Precedence Table, then process block 800 disables input devices capable of changing the precedence or focus of the system. Thereafter, process block 810 sets a Target Precedence Requester equal to the precedence request represented by the single entry in the Precedence Table. The Target Precedence Requester is a presentation which receives precedence or focus. Thereafter, process block 700 gives precedence or focus to, or pops into the foreground, the Target Precedence Requester. Thereafter, process block 710 exits the code critical section. Thereafter, process block 720 returns a message to the Precedence Detection Process that the precedence request was successfully serviced. Thereafter, the program returns to the Precedence Detection Process that called it. If process block 520, on Figure 5, called the Precedence Play Process, then the program returns to process block 520 on Figure 5. If process block 540, on Figure 5, called the Precedence Play Process, then the program returns to process block 540 on Figure 5.

Returning now to decision block 630, if the received precedence request is not a start precedence request (if the received precedence request is an end precedence request), then process block 640 accesses the Precedence Table with the end precedence request to retrieve a corresponding start precedence request entry. Thereafter, decision block 650 determines if the corresponding start precedence request entry was found. If the corresponding start precedence request entry was found, then process block 660 removes the corresponding start precedence request entry from the Precedence Table. Thereafter, decision block 670 determines if there are any remaining entries in the Precedence Table. If there are not any remaining entries in the Precedence Table, then process block 750 enables those input devices capable of changing the precedence or focus of the system, that were previously disabled. Thereafter, process block 720 returns a message to the Precedence Detection Process that the precedence request was successfully serviced. Thereafter, the program returns to the Precedence Detection Process that called it. If process block 520, on Figure 5, called the Precedence Play Process, then the program returns to process block 520 on Figure 5. If process block 540, on Figure 5, called the Precedence Play Process, then the program returns to process block 540 on Figure 5.

Returning now to decision block 780, if there is not only one precedence request entry in the Precedence Table, then decision block 790 determines if the start precedence request entry just placed in the Precedence Table has the highest priority of all entries in the Precedence Table. If the start precedence request entry just placed in the Precedence Table has the highest priority of all entries in the Precedence Table, then the program continues to process block 810 to set the Target Precedence Requester equal to the start precedence request entry just placed in the Precedence Table. This gives precedence or focus to the precedence request entry just placed in the Precedence Table.

Returning now to decision block 790, if the start precedence request entry just placed in the Precedence Table does not have the highest priority of all entries in the Precedence Table, then the program continues to process block 710 which exits the code critical section. This denies precedence or focus to the precedence request entry just placed in the Precedence Table, as there is another precedence request with a higher priority in the Precedence Table, to which precedence or focus will be given.

Returning now to decision block 670, if there are any remaining entries in the Precedence Table, then process block 680 determines the Precedence Table entry with the highest priority. Thereafter, process block 690 sets the Target Precedence Requester equal to the precedence request represented by the entry in the Precedence Table with the highest priority. Thereafter, the program continues to process block 700 which gives precedence or focus to, or pops into the foreground, the Target Precedence Requester.

Returning now to decision block 650, if the corresponding start precedence request entry was not found, then process block 730 exits the code critical section. Thereafter, process block 740 returns a message to the Precedence Detection Process that an error occurred, that the end precedence request was not valid as there was no corresponding start precedence request, and that the precedence request was not successfully serviced. Thereafter, the program returns to the Precedence Detection Process that called it. If process block 520, on Figure 5, called the Precedence Play Process, then the program returns to process block 520 on Figure 5. If process block 540, on Figure 5, called the Precedence Play Process, then the program returns to process block 540 on Figure 5.

Returning now to decision block 610, if the precedence request is not valid, then process block 760 returns a message to the Precedence Detection Process that an error occurred, that the precedence request was not a valid precedence request, and that the precedence request was not successfully serviced. Thereafter, the program returns to the Precedence Detection Process that called it. If process block 520, on Figure 5, called the Precedence Play Process, then the program returns to process block 520 on Figure 5. If process block 540, on Figure 5, called the Precedence Play Process, then the program returns to process block 540 on Figure 5.

Although the present invention has been particularly shown and described with reference to a preferred embodiÜment, it will be understood by those skilled in the art that various changes in form and detail may be made without departing from the spirit and the scope of the invention.

## Claims

1. A method of providing focus for a presentation produced by a multitasking data processing system, said method comprising the steps of:
associating a priority with the presentation;
detecting the association of priority with the presentation;
requesting focus for the presentation upon detecting the association of priority with the presentation; and
providing focus for the presentation indicated by the association.

2. The method of claim 1, wherein the step of providing focus for the presentation indicated by the association further comprises the step of:
preventing a second presentation from gaining focus while the presentation indicated by the association is produced.

3. The method of claim 2, wherein the step of providing focus for the presentation indicated by the association further comprises the steps of:
providing a first focus for the presentation indicated by an association having a highest priority; and
providing a second focus for a second presentation indicated by a second association having a power priority, the second focus being provided after completion of the first focus.

4. The method of claim 1, wherein the step of associating a priority with the presentation further comprises the steps of:
placing a start precedence mark in the presentation at a start of a portion of the presentation for which focus is requested; and
placing an end precedence mark in the presentation at an end of the portion of the presentation for which focus is requested.

5. The method of claim 4, wherein the start precedence mark and the end precedence mark each comprise:
a unique identifier to distinguish the start precedence mark and end precedence mark from a data object which is neither a start precedence mark nor an end precedence mark;
a precedence mark type to distinguish a start precedence mark from an end precedence mark; and
a priority.

6. The method of claim 1, wherein the step of associating a priority with the presentation further comprises the steps of:
storing a location of a start of a portion of the presentation for which focus is requested; and
storing a location of an end of a portion of the presentation for which focus is requested.

7. An apparatus for providing focus for a presentation produced by a multitasking data processing system, said apparatus comprising:
means for associating a priority with the presentation;
means for detecting the association of priority with the presentation;
means for requesting focus for the presentation upon detecting the association of priority with the presentation; and
means for providing focus for the presentation indicated by the association.

8. The apparatus of claim 7, wherein the means for providing focus for the presentation indicated by the association further comprises:
means for preventing a second presentation from gaining focus while the presentation indicated by the association is produced.

9. The apparatus of claim 8, wherein the means for providing focus for the presentation indicated by the association further comprises:
means for providing a first focus for the presentation indicated by an association having a highest priority; and
means for providing a second focus for a second presentation indicated by a second association having a lower priority, the second focus being provided after completion of the first focus.

10. The apparatus of claim 7, wherein the means for associating a priority with the presentation further comprises:
means for placing a start precedence mark in the presentation at a start of a portion of the presentation for which focus is requested; and
means for placing an end precedence mark in the presentation at an end of the portion of the presentation for which focus is requested.

11. The apparatus of claim 10, wherein the start precedence mark and the end precedence mark each comprise:
a unique identifier to distinguish the start precedence mark and end precedence mark from a data object which is neither a start precedence mark nor an end precedence mark;
a precedence mark type to distinguish a start precedence mark from an end precedence mark; and
a priority.

12. The apparatus of claim 7, wherein the means for associating a priority with the presentation further comprises:
means for storing a location of a start of a portion of the presentation for which focus is requested; and
means for storing a location of an end of a portion of the presentation for which focus is requested.
